# EUROPEAN PATENT APPLICATION

(11) **EP 1 953 883 A1**
(43) Date of publication of application: **06.08.2008**
(21) Application number: 07425065.5
(22) Date of filing: 05.02.2007
(51) Int. Cl.: H02G 1/08

(54) **Tape machine**

(71) Applicant: Canfor Utensili SRL, 20122 Milano (IT)
(72) Inventor: Zapparoli, Franco, 20149 Milano (IT)
(74) Representative: Dragotti, Gianfranco

(57) **Abstract**

A cable insertion machine (1, 100) for moving tapes (6) comprises a tape guiding apparatus (30, 130) comprising in turn at least one pulley (33, 133) and corresponding locating means (34, 150) situated facing and pressed towards the outer surface of said at least one pulley (33, 133); the tape (6) to be moved is arranged between the at least one pulley (33, 133) and the locating means (34, 150); motor means (22) have the function of ensuring rotation, performed in a predefined direction, of the at least one pulley (33, 133) so that the tape (6) is consequently moved.

## Description

The present invention relates to a cable insertion machine for laying electric cables, in particular inside ducts in domestic and industrial installations, and the description which follows is provided in relation to this field of application for the sole purpose of simplifying illustration thereof.

For the laying of cables inside ducts, in particular electric conductor cables, usually tapes which have a flexible body made of suitable material are used, said tapes having two ends, a first end of which is inserted inside the duct as a guide, while a cable is connected to the second end: the first end or head of the tape is inserted inside the desired duct, usually in the region of a socket box and the tape is pushed until its head emerges from a branch box. The head of the tape, which retains the electric cable fixed to the second end or tail of the tape, is then pulled until the tail of the tape is completely extracted, so that the cable thus drawn along remains housed inside the desired duct.

Sometimes, instead of a single cable, several cables, which are therefore laid simultaneously, are fastened to the end of the tape.

Until now, insertion of the tape has been performed manually by the operator who pushes the tape by hand, often with difficulty, causing it to advance by means of force inside the duct.

The laying of electric cables inside the ducts is made difficult also owing to the presence of bends, twists or constrictions which alter the dimensional characteristics of the duct.

Therefore, insertion of the tapes is often a very time and energy consuming operation, owing to the length of the duct which must be travelled along, the probable roughness which is present inside the duct and also the diameter of the tape to be inserted.

In the industrial sector, for example, tapes with a diameter also in the region of various millimetres are used, said tapes also having a considerable intrinsic resistance to pushing even when there is no roughness or no obstacles along the duct.

Obviously, with an increase in the diameter and where necessary the length of the tape, the manual effort required on the part of the operator increases and the latter, when encountering an obstacles, often pulls out the tape by a small amount and then pushes it forwards again.

The object of the invention is to provide a cable insertion machine which is able to solve substantially the problems mentioned above, so as to be able to lay more easily cables inside ducts in both domestic and industrial environments.

The technical problem is solved by a cable insertion machine for moving flexible means, characterized in that it comprises:
- an assembly which is able to be engaged by said flexible means and comprising at least one pulley and corresponding locating means situated facing and pressed adjustably towards the outer surface of said at least one pulley;
- motor means for rotation, performed in a predetermined direction, of said at least one pulley;
said flexible means being kept engaged with friction by said locating means against the outer surface of said at least one pulley.

The cable insertion machine according to the present invention allows the insertion and extraction of the tape into/from a duct without any manual effort on the part of the operator, who simply has the task of operating the appropriate controls of the machine.

The machine is suitable both for the motorized insertion and extraction of a tape into/from a duct and for the motorized transfer of a tape from a reel towards another reel which is of a different size or because of damage to the reel, as well for the motorized transfer from a tape storage container to a reel for subsequent use.

Furthermore, the cable insertion machine is suitable for use, in its various embodiments, in large, medium and small-size business premises, as well as in a domestic environment.

The cable insertion machine according to the invention, moreover, can be easily used and complies with accident-prevention regulations also owing to a special cowling which prevents the operator from coming into contact with the moving parts.

The characteristic features of the invention will emerge from the description, provided hereinbelow, of some examples of embodiment provided purely by way of a non-limiting example with reference to the accompanying drawings.
- Figure 1 is a side view of a first embodiment of a cable insertion machine according to the invention;
- Figure 2 is a front view of the cable insertion machine according to Figure 1;
- Figure 3 is a side view of a detail of the cable insertion machine according to Figures 1 and 2;
- Figure 3a is a front view of the detail of the cable insertion machine shown in Figure 3;
- Figure 4 is a side view of a second embodiment of a cable insertion machine according to the invention;
- Figure 4a is a cross-sectional view of the cable insertion machine according to Figure 4;
- Figure 4b is an enlarged detail of Figure 4a.

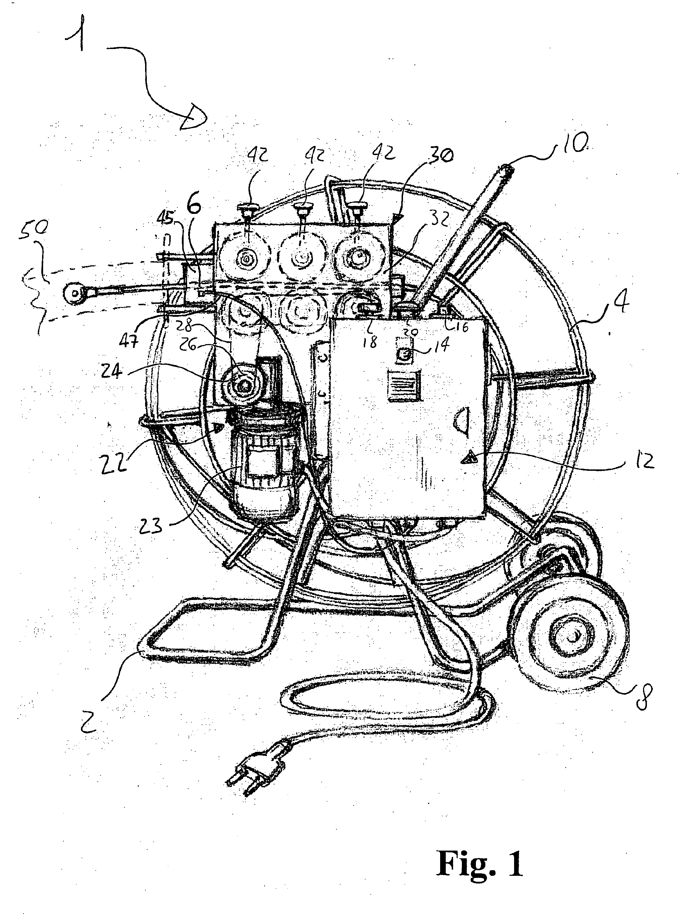

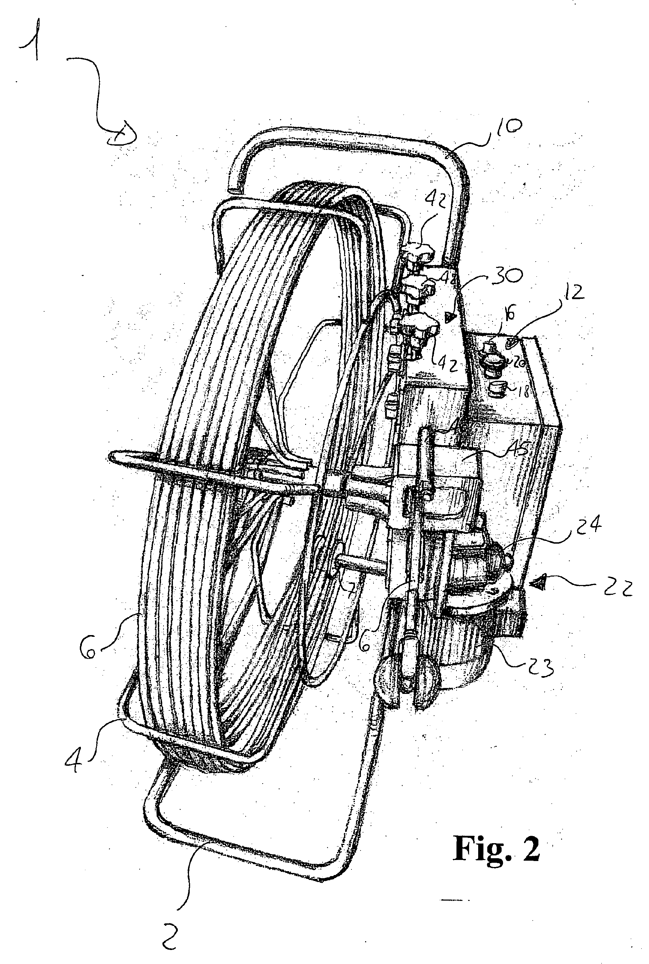

With reference to these figures, Figures 1 and 2 show a cable insertion machine 1, according to a first embodiment of the present invention, which comprises a frame 2 on which a reel 4 is rotatably and removably fixed, which reel also has, rolled around it, a tape 6 which is fixed at one end to the reel 4 and intended to be inserted inside a duct.

The frame 2 has wheels 8 and a pushing handle 10 for allowing easy movement of the cable insertion machine 1.

The tape 6, during unrolling from the reel 4, is directed by means of a ratchet wheel 7, which is fixed to the frame 2, towards a suitable first tape guiding apparatus 30.

According to the invention the cable insertion machine 1 is motorized.

An electric control unit 12 is fixed onto the frame 2 and is responsible for transmission of the commands to motor means 22 of the cable-insertion machine 1 for the required operations, according to the invention.

The control unit is provided with an electric panel with a ON/OFF button 14 for the machine 1, a knob 16 for adjusting the speed of movement of the tape 6, a lever 18 for controlling the advancing movement or return movement of the tape 6 and an emergency pushbutton 20 for stopping the machine 1 in the event of problems.

The motor means indicated in the figures by 22 comprise an electric motor 23 which is controlled by the control unit 12 and coupled to a suitable gear motor 24 which converts the speed of rotation of the motor 23 into a speed which can be used by the components of the cable insertion machine 1.

The motor 23 operates preferably with alternating current at 220 Volts or 380 Volts at the terminals. Other small motors may be used without thereby departing from the idea of the invention.

The gear motor 24 is provided with a friction clutch consisting of a gearwheel 26 onto which a chain 28 is wound; with this chain the rotary movement is transmitted from the gear motor 24 to the first tape guiding apparatus 30.

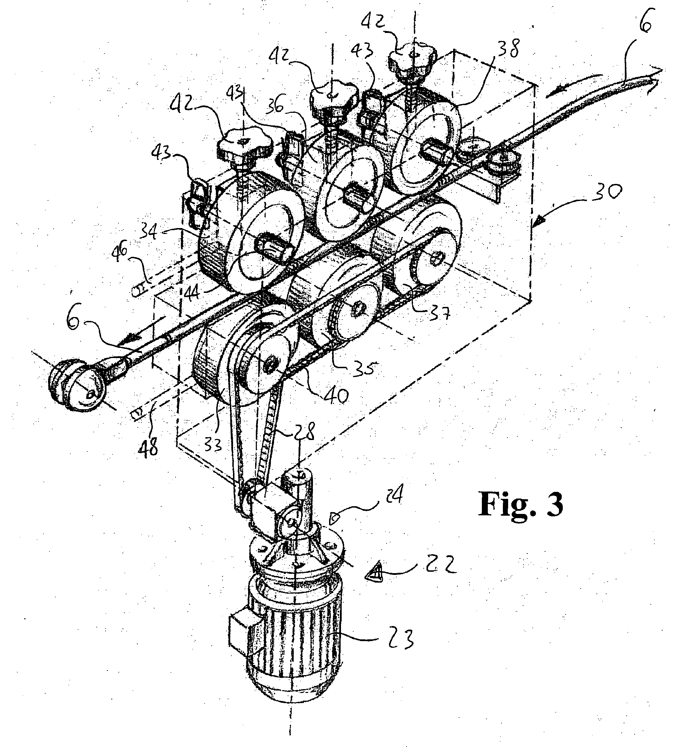

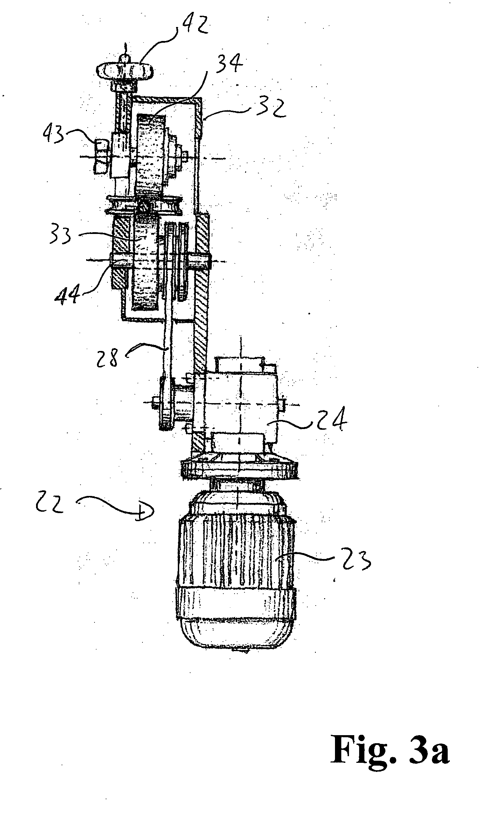

Such an apparatus comprises a housing 32 inside which a first plurality of drive pulleys 33, 35, 37 and a second plurality of idle pulleys 34, 36, 38 are arranged facing each other, as shown in Figure 1, but numbered in detail in Figures 3 and 3a; the first plurality is arranged underneath the second plurality, without the ends of each pair of opposite pulleys coming into contact. The gap between each pair of opposite pulleys is occupied by the tape 6 which is moving or at rest so that the tape 6 is always engaged by both the pluralities of pulleys.

In the preferred embodiment three pairs of oppositely arranged pulleys (33,34; 35,36; 37,38) are present; of the three pulleys (33, 35, 37) positioned in the bottom of the housing 32, one is rotationally constrained by means of the chain 28 to the shaft of the gear motor 24, in particular, in the present embodiment, the pulley 33. The latter is in turn connected by means of a drive chain 40 to the other pulleys 35, 37 which are situated in the bottom of the housing 32.

The chain connections may also be realised in different ways, with pulleys different from the first plurality of pulleys 33, 35, 37 being involved, without this departing from the scope of protection of the invention.

The second plurality of pulleys 34, 36, 38 in the top of the housing is in the idle condition and is responsible for accompanying the tape 6 which is moved by the drive pulleys 33, 35, 37 and for adjustment of the pressure on the tape.

The pulleys made be made of the most suitable materials, preferably have a central core around its axis made of ferrous material and are lined with rubber, nylon or the like. Optionally they may be knurled in order to transmit better the movement to the tape 6; by way of a further alternative, they may have a perimetral V-shaped profile which is able to seat and clamp with pressure the moving tape.

At the top of the housing 32, screw-type handwheels 42, which are equal in number to the number of pulleys in the idle condition, have the function of adjusting this pressure; these handwheels 42 have a threaded rod which acts perpendicularly on a horizontal pin 44 which is arranged along the axis of the pulleys in the idle condition 34, 36, 38 and pass through the centre of them, allowing the position of each idle pulley 34, 36, 38 to be adjusted vertically; this allows each idle pulley to adhere better to the upper profile of the tape 6 so that the latter is also properly gripped, along its bottom profile, by the drive pulleys 33, 35, 37.

While the handwheels 42 have the function of vertically adjusting the idle pulleys 34, 36, 38, there also exists the possibility of horizontal adjustment of the said pulleys, preventing them from having excessive play during rotation. Special regulating wing nuts 43 act along the axis 44 of the idle pulleys 34, 36, 38 for this purpose.

A precise vertical and horizontal adjustment of the idle pulleys allows efficient conversion of the rotational movement of the bottom pulleys into a translatory movement of the tape 6 which is moved by the first tape guiding apparatus 30.

The drive pulleys 33, 35, 37, differently from the idle pulleys 34, 36, 38, are rotationally constrained and not adjustable.

Two small additional pulley blocks, which are arranged in a plane perpendicular to the plane of the two pulleys, guide the tape 6 so that it does not waver excessively while it is being drawn inside the tape guiding apparatus 30.

At the output of the first tape guiding apparatus 30, an output box 45, which is provided with a cavity for insertion of the tape 6, comprises a sensor for detecting the advanced or retracted state of the tape so that the head of the tape stops before it strikes against the tape guiding apparatus during retraction or before the tape risks being pulled apart as a result of being unrolled beyond its length; such a sensor is powered by the electric control unit 12 via the cable 47.

The output box 45 has, fixed thereto, two pins 46, 48 for engagingly receiving a pipe 50 (or "nose" in technical jargon), shown in broken lines in the figures, for connection from the frame 2 to the duct, so that the tape 6 can be guided towards the duct, even when the latter has a mouth situated in positions which cannot be easily reached.

In order to improve the safety and accident-prevention features of the machine 1, a cowling (not shown in the figures) which completely covers the reel is shown. With this arrangement any possibility of the operator's hands coming into contact with the spokes of the rotating reel or the moving tape is prevented.

A cowling is also envisaged for the motor means.

In a second embodiment of the invention, the parts in common with the first embodiment shown in Figures 1, 2 and 3 are identified by the same numbers.

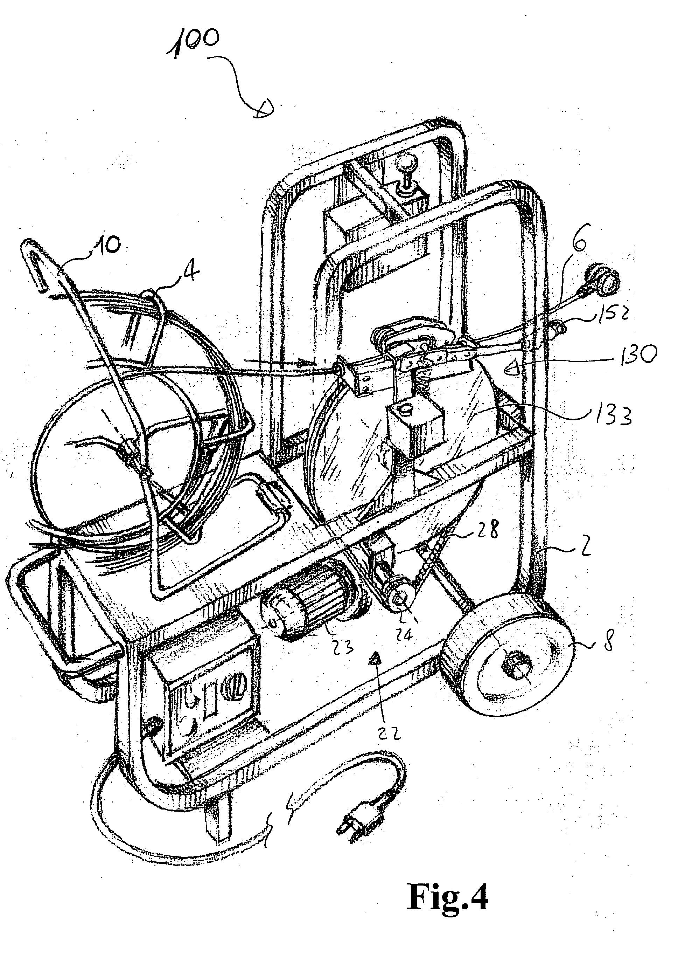

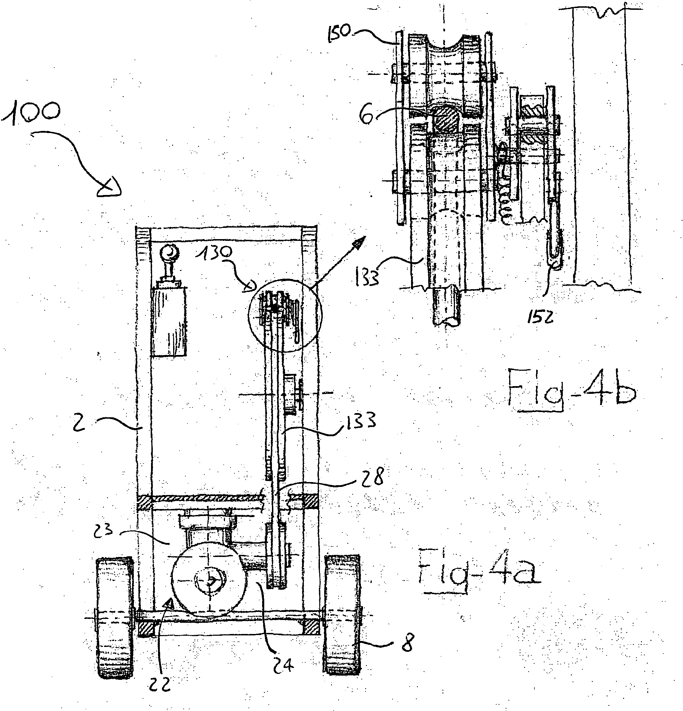

In Figures 4, 4a and 4b, a cable insertion machine 100 is provided with a second cable guiding apparatus 130 which has the function of moving the tape.

This machine is also motorized and controlled by an electric control unit which is equipped with the same accessories as that envisaged for the cable insertion machine of the first embodiment.

The motor means are also identical to those of the first embodiment.

A second tape guiding apparatus 130, instead, preferably has a single pulley 133 and a sliding block 150 which acts against the pulley 133 so that it engages with friction with the tape 6 during its travel movement or when at rest.

The sliding block 150 comprises a plurality of pulley blocks (for example 4) which, by means of a pressure loading and release lever 152, preferably operating with a spring mechanism, exert an adjustable pressure on the tape 6 so as to allow better transmission of the rotary movement from the pulley to the tape. The machine 100 is more suitable than the machine 1 for medium-size business and domestic users.

Operation of the cable insertion machine according to the invention can be easily understood from that described hitherto.

Once the machine has been positioned in the vicinity of the conduit into which the tape 6 must be inserted and after positioning, where necessary, the nose 50 for improved directional adjustment of the tape 6 towards the duct, the operator switches on the machine by means of the button 14, adjusts the desired speed of insertion of the tape 6 by means of the knob 16 and starts up the motor 23 using the lever 18; the movement of the motor 23 converted by the gear motor 24 is transmitted by means of the chain 28 to the pulley 33; the latter transmits, by means of a second chain 40, a rotational movement to the other two pulleys 35, 37; the rotation of the pulleys allows sliding of the tape 6.

The upper pulleys 34, 36, 38 are adjusted manually beforehand by an operator in the vertical and horizontal directions by means of the screw-type handwheels 42 and the wing nuts 43 so that they are able to engage with friction in an optimum manner with the tape 6 and are not subject to axial displacement during the movement of the tape.

The engagement of the upper pulleys 34, 36, 38 and driving of the bottom pulleys 33, 35, 37 ensures correct movement of the tape 6 in the predefined directions of movement.

The operator, when carrying out the operations for moving the tape, is never able to come into contact with the tape rotating on the reel, since the latter is protected by a special cowling.

## Claims

1. Cable insertion machine (1, 100) for moving flexible means (6), **characterized in that** it comprises:
- an assembly (30, 130) able to be engaged by said flexible means (6): and comprising at least one pulley (33, 133) and corresponding locating means (34, 150) situated facing and pressed in an adjustable manner towards the outer surface of said at least one pulley (33, 133);
- motor means (22) for rotation, performed in a predefined direction, of said at least one pulley (33, 133),
said flexible means (6) being kept engaged with friction by said locating means (34, 150) against the outer surface of said at least one pulley (33, 133).

2. Cable insertion machine (1) according to Claim 1, in which said locating means comprise at least one pulley (34) in the idle condition.

3. Cable insertion machine (100) according to Claim 1, in which said locating means comprise at least one sliding block (150).

4. Cable insertion machine (1, 100) according to Claim 1, in which said assembly (30, 130) comprises means (42, 43, 152) for adjusting the position of said locating means (34, 150).

5. Cable insertion machine (1) according to Claim 4, in which said means (42, 43) for adjusting the position of said locating means (34) comprise screw-type handwheels (42) and adjusting wing nuts (43).

6. Cable insertion machine (100) according to Claim 4, in which said means (152) for adjusting the position of said locating means (150) comprise a lever (152).

7. Cable insertion machine (100) according to Claim 3, in which said sliding block (150) comprises a plurality of pulley blocks which are able to allow the sliding movement of said tape (6).

8. Cable insertion machine (1, 100) according to any one of the preceding claims, in which said assembly (30, 130) further comprises pulling means (28) able to transmit a rotational movement from said motor means (22) to said at least one pulley (33, 133).

9. Cable insertion machine (1, 100) according to Claim 8, in which said pulling means (28) comprise a chain.

10. Cable insertion machine (1, 100) according to one of the preceding claims, in which said motor means (22) comprise an electric motor (23).

11. Cable insertion machine (1, 100) according to one of the preceding claims, in which said motor means (22) comprise a gear motor (24) which is coupled to said electric motor (23).

12. Cable insertion machine (1, 100) according to one of the preceding claims, in which said flexible means (6) are arranged on a reel (4).

13. Cable insertion machine (1, 100) according to Claim 12, in which said reel (4) is removably associated with a frame (2) for supporting said cable insertion machine (1, 100).

14. Cable insertion machine (1, 100) according to one of the preceding claims, comprising an electric control unit (12) for transmitting the operating instructions to said motor means (22).

15. Cable insertion machine (1, 100) according to Claim 1, **characterized in that** it comprises, downstream of said assembly (30, 130), a duct for insertion of said flexible means (6).

16. Cable insertion machine (1, 100) according to Claim 1, **characterized in that** it comprises, downstream of said assembly (30, 130), a reel able to receive said flexible means (6).
